(19) Europäisches Patentamt / European Patent Office / Office européen des brevets

(11) **EP 4 431 460 A1**

(12) **EUROPEAN PATENT APPLICATION**
published in accordance with Art. 153(4) EPC

(43) Date of publication:
**18.09.2024 Bulletin 2024/38**

(21) Application number: **23774791.0**

(22) Date of filing: **17.03.2023**

(51) International Patent Classification (IPC):
**C01G 25/02** (2006.01)    **C01G 25/00** (2006.01)

(52) Cooperative Patent Classification (CPC):
**C01G 25/00; C01G 25/02;** Y02E 60/10

(86) International application number:
**PCT/JP2023/010521**

(87) International publication number:
**WO 2023/182196 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 JP 2022049263**

(71) Applicant: **Daiichi Kigenso Kagaku Kogyo Co., Ltd.**
**Osaka-shi, Osaka 541-0041 (JP)**

(72) Inventor: **NIWA,Tadahiro**
**Osaka-shi, Osaka 559-0025 (JP)**

(74) Representative: **Cabinet Beau de Loménie**
**158, rue de l'Université**
**75340 Paris Cedex 07 (FR)**

(54) **ZIRCONIA-BASED POWDER MATERIAL**

(57) A zirconia-based powder material, wherein $[(Vp_{10-100})/(Vp_{100-6000})]$ satisfies the following Formula [1], provided that in a pore diameter distribution determined by a mercury intrusion method, a pore volume in a range of a pore diameter of X nm or more and less than Y nm is taken as $Vp_{X-Y}$:

$$\text{Formula [1] } 0.4 \leq [(Vp_{10-100})/(Vp_{100-6000})] \leq 1.$$

Fig.2

**Description**

TECHNICAL FIELD

The present invention relates to a zirconia-based powder material.

BACKGROUND ART

In recent years, a zirconia-based powder material containing zirconium oxide as a main component has attracted attention as an additive material that improves the characteristics of an electronic material. Specific examples of use thereof include composite applications with an electrode active material for the purpose of stabilizing the structure of the electrode active material in a lithium ion secondary battery, and inorganic filler applications for improving the heat resistance and the like of a separator.

Patent Document 1 discloses a zirconia-based porous body having a total pore volume of 1.0 ml/g or more, a pore volume of pores having a diameter of 20 nm or more and less than 100 nm of 0.3 ml/g or less, and a pore volume of pores having a diameter of 100 nm or more and 1000 nm or less of 0.5 ml/g or more in a pore distribution based on a mercury intrusion method (see claim 1).

PRIOR ART DOCUMENT

PATENT DOCUMENT

Patent Document 1: WO 2020/195973

SUMMARY OF THE INVENTION

PROBLEMS TO BE SOLVED BY THE INVENTION

As in the above-described applications, in applications in which a zirconia-based powder material and other material are composited, it is important how the zirconia-based powder material and the other material can be uniformly composited.

As a result of intensive studies, the present inventor has come to think that a more uniform composite can be obtained if a zirconia-based powder material having a fragile aggregation structure and capable of being easily atomized can be provided.

The present invention has been made in view of the above-described problems, and an object of the present invention is to provide a zirconia-based powder material in which fine particles are easily obtained by an easy crushing treatment.

MEANS FOR SOLVING THE PROBLEMS

The present inventor has diligently studied a zirconia-based powder material. As a result, the present inventor surprisingly found that

fine particles of a zirconia-based powder material having the following configuration are easily obtained by an easy crushing treatment, and completed the present invention.

That is, a zirconia-based powder material according to the present invention, wherein $[(V_{P10\text{-}100})/(V_{P100\text{-}6000})]$ satisfies the following Formula [1], provided that in a pore diameter distribution determined by a mercury intrusion method, a pore volume in a range of a pore diameter of X nm or more and less than Y nm is taken as $Vp_{x\text{-}y}$:

$$\text{Formula [1]} \quad 0.4 \leq [(Vp_{10\text{-}100})/(Vp_{100\text{-}6000})] \leq 1.$$

Pores having a pore diameter of 10 nm or more and less than 100 nm are gaps of primary particles that serve as the starting points of crushing of aggregated particles of secondary particles of the zirconia-based powder material. Pores having a pore diameter of 100 nm or more and less than 6000 nm are gaps of secondary particles that serve as the starting points of crushing of aggregated particles of tertiary particles of the zirconia-based powder material.

According to the above configuration, $[(Vp_{10\text{-}100})/(V_{P100\text{-}6000})]$ satisfies the formula [1], and thus both the pores that serve as the starting points of crushing of aggregated particles of secondary particles and have a pore diameter of 10 nm or more and less than 100 nm and the pores that serve as the starting points of crushing of aggregated particles of tertiary particles and have a pore diameter of 100 nm or more and less than 6000 nm exist to some extent.

For example, when $[(V_{P10-100})/ (V_{P100-6000})]$ exceeds 1, there are many pores having a pore diameter of 10 nm or more and less than 100 nm and there are many gaps of primary particles that serve as the starting points of crushing of aggregated particles of secondary particles, but there are few pores having a pore diameter of 100 nm or more and less than 6000 nm and there are few gaps of secondary particles that serve as the starting points of crushing of aggregated particles of tertiary particles. Therefore, although the aggregated particles of the secondary particles can be easily broken, the aggregated particles of the tertiary particles cannot be easily crushed, and as a whole, the easy pulverizability is poor.

When $[(V_{P10-100})/ (V_{P100-6000})]$ is less than 0.4, there are many pores having a pore diameter of 100 nm or more and less than 6000 nm and there are many gaps of secondary particles that serve as the starting points of crushing of aggregated particles of tertiary particles, but there are few pores having a pore diameter of 10 nm or more and less than 100 nm and there are few gaps of primary particles that serve as the starting points of crushing of aggregated particles of secondary particles. Therefore, although the aggregated particles of the tertiary particles can be easily broken, the aggregated particles of the secondary particles cannot be easily crushed, and as a whole, the easy pulverizability is poor.

Meanwhile, according to the present invention, $[(Vp_{10-100})/ (V_{P100-6000})]$ satisfies the above Formula [1], and thus both the gaps of primary particles and the gaps of secondary particles that serve as the starting points of crushing of aggregated particles can be said to be appropriately provided. Therefore, the zirconia-based powder material can be atomized by an easy crushing treatment without using a strong crushing method.

In Patent Document 1, a zirconia-based porous body is pulverized using a planetary ball mill in order to obtain a fine particle powder having a particle diameter $D_{50}$ of 1 um or less (paragraph [0170]), and it is hard to say that the zirconia-based porous body is a powder material that can be crushed by an easy method.

This is apparent from the evaluation result of Comparative Example 3 in the present description obtained by corroborating Example 2 of Patent Document 1. In Comparative Example 3 in the present description, the particle size after the crushing treatment by the homogenizer under a gentle condition is rougher than that in Examples in the present description.

In the above configuration, $[(V_{P10-100})/(V_{P5-6000})]$ preferably satisfies the following Formula [2]:

$$\text{Formula [2]} \quad 0.2 \leq [(Vp_{10-100})/(Vp_{5-6000})] \leq 0.5.$$

When the above $[(V_{P10-100})/ (Vp_{5-6000})]$ is 0.2 or more and 0.5 or less, relatively large gaps of primary particles that serve as the starting points of crushing are appropriately included, so that the zirconia-based powder material can be more easily atomized.

Note that $Vp_{5-6000}$ is the pore volume in the entire range of the pore diameter distribution.

That is, the above $[(V_{P10-100})/ (Vp_{5-6000})]$ means the ratio of the volume of pores having a pore diameter of 10 nm or more and less than 100 nm to the pore volume in the entire range of the pore diameter distribution.

In the above configuration, $[(Vp_{5-10})/ (Vp_{5-6000})]$ preferably satisfies the following Formula [3]:

$$\text{Formula [3]} \quad 0.001 \leq [(Vp_{5-10})/(Vp_{5-6000})] \leq 0.1.$$

When the above $[(V_{P5-10})/ (Vp_{5-6000})]$ is 0.001 or more and 0.1 or less, small gaps of primary particles (pores having a pore diameter of 5 nm or more and less than 10 nm) that inhibit crushing are sufficiently few, so that the zirconia-based powder material can be more easily atomized.

The above $[(Vp_{5-10})/ (V_{PS-6000})]$ means the ratio of the volume of pores having a pore diameter of 5 nm or more and less than 10 nm to the pore volume in the entire range of the pore diameter distribution.

In the above configuration, $[(Vp_{100-6000})/ (V_{P5-6000})]$ preferably satisfies the following Formula [4]:

$$\text{Formula [4]} \quad 0.5 \leq [(Vp_{100-6000})/(Vp_{5-6000})] \leq 0.8.$$

When the above $[(Vp_{100-6000})/ (Vp_{5-6000})]$ is 0.5 or more and 0.8 or less, relatively large gaps of secondary particles that serve as the starting points of crushing are appropriately included, and the zirconia-based powder material can be more easily atomized.

In the above configuration, $Vp_{5-6000}$ is preferably 0.5 mL/g or more and 2 mL/g or less.

When $Vp_{5-6000}$ is 0.5 mL/g or more and 2 mL/g or less, the zirconium-based powder material can be said to have many pores that serve as the starting points of cracks. Therefore, the zirconia-based powder material can be more easily atomized.

In the above configuration, it is preferable that $ZrO_2$ is contained in an amount of 70% by mass or more.

When $ZrO_2$ is contained in an amount of 70% by mass or more, a large amount of $ZrO_2$-derived fragile particles are contained, and therefore the pulverizability is more excellent.

In the above configuration, a particle diameter $D_{50}$ after the following crushing treatment is preferably 0.05 um or more and 1.5 um or less:

<Crushing treatment>

0.1 g of the zirconia-based powder is charged into 40 mL of pure water, and subjected to a homogenizer treatment for 5 minutes under the following crushing condition using an ultrasonic homogenizer manufactured by BRANSON: product name Digital Sonifier 250 type:

<Crushing condition>

oscillation frequency: 20 kHz;
high frequency output: 200 W; and
amplitude control: 40 $\pm$ 5%.

The crushing treatment is a crushing treatment under a relatively gentle condition. According to the above configuration, the particle diameter $D_{50}$ is set to 1.5 um or less by a gentle crushing treatment. Therefore, the zirconia-based material powder can be said to be easily atomized.

EFFECT OF THE INVENTION

According to the present invention, it is possible to provide a zirconia-based powder material in which fine particles are easily obtained by an easy crushing treatment.

BRIEF DESCRIPTION OF THE DRAWING

Fig. 1 is a schematic view for explaining a method for producing a zirconia-based powder material according to the present embodiment.
Fig. 2 is the pore distribution of a zirconia-based powder material of Example 1.
Fig. 3 is the pore distribution of a zirconia-based powder material of Example 2.
Fig. 4 is the pore distribution of a zirconia-based powder material of Example 3.
Fig. 5 is the pore distribution of a zirconia-based powder material of Example 4.
Fig. 6 is the pore distribution of a zirconia-based powder material of Example 5.
Fig. 7 is the pore distribution of a zirconia-based powder material of Example 6.
Fig. 8 is the pore distribution of a zirconia-based powder material of Example 7.
Fig. 9 is the pore distribution of a zirconia-based powder material of Comparative Example 1.
Fig. 10 is the pore distribution of a zirconia-based powder material of Comparative Example 2.
Fig. 11 is the pore distribution of a zirconia-based powder material of Comparative Example 3.
Fig. 12 is the particle diameter distribution of the zirconia-based powder material of each of Example 1, Comparative Example 1, and Comparative Example 3 after a crushing treatment.

MODE FOR CARRYING OUT THE INVENTION

Hereinafter, embodiments of the present invention will be described. However, the present invention is not limited only to these embodiments. In the present description, zirconium hydroxide is a common zirconium hydroxide and contains 10% by mass or less of impurity metal compounds including hafnium.

[Zirconia-based powder material]

A zirconia-based powder material according to the present embodiment, wherein [(Vp$_{1-100}$)/ (V$_{P100-6000}$)] satisfies the following Formula [1], provided that in a pore diameter distribution determined by a mercury intrusion method, a pore volume in a range of a pore diameter of X nm or more and less than Y nm is taken as $Vp_{x-y}$:

$$\text{Formula [1]} \quad 0.4 \leq [(Vp_{10-100})/(Vp_{100-6000})] \leq 1.$$

The zirconia-based powder material includes primary particles that are not aggregated, secondary particles in which the primary particles are aggregated, and tertiary particles in which the secondary particles are aggregated.

It is noted that, in the zirconia-based powder material, the amount of primary particles that do not form secondary particles and exist in the state of unaggregated primary particles is very small, and is, for example, less than 1% by mass of the entire primary particles (the total of unaggregated primary particles and primary particles aggregated and forming secondary particles). That is, the zirconia-based powder material may contain a very small amount of unaggregated primary particles, but most of the zirconia-based powder material is composed of secondary particles and tertiary particles.

Pores having a pore diameter of 10 nm or more and less than 100 nm are gaps of primary particles that serve as the starting points of crushing of aggregated particles of secondary particles of the zirconia-based powder material. Pores having a pore diameter of 100 nm or more and less than 6000 nm are gaps of secondary particles that serve as the starting points of crushing of aggregated particles of tertiary particles of the zirconia-based powder material.

According to the zirconia-based powder material, $[(V_{P10-100}/(V_{P100-6000})]$ satisfies the formula [1], and thus both the pores that serve as the starting points of crushing of aggregated particles of secondary particles and have a pore diameter of 10 nm or more and less than 100 nm and the pores that serve as the starting points of crushing of aggregated particles of tertiary particles and have a pore diameter of 100 nm or more and less than 6000 nm exist to some extent.

For example, when $[(V_{P10-100}/(V_{P100-6000})]$ exceeds 1, there are many pores having a pore diameter of 10 nm or more and less than 100 nm and there are many gaps of primary particles that serve as the starting points of crushing of aggregated particles of secondary particles, but there are few pores having a pore diameter of 100 nm or more and less than 6000 nm and there are few gaps of secondary particles that serve as the starting points of crushing of aggregated particles of tertiary particles. Therefore, although the aggregated particles of the secondary particles can be easily broken, the aggregated particles of the tertiary particles cannot be easily crushed, and as a whole, the easy pulverizability is poor.

When $[(V_{P10-100}/(V_{P100-6000})]$ is less than 0.4, there are many pores having a pore diameter of 100 nm or more and less than 6000 nm and there are many gaps of secondary particles that serve as the starting points of crushing of aggregated particles of tertiary particles, but there are few pores having a pore diameter of 10 nm or more and less than 100 nm and there are few gaps of primary particles that serve as the starting points of crushing of aggregated particles of secondary particles. Therefore, although the aggregated particles of the tertiary particles can be easily broken, the aggregated particles of the secondary particles cannot be easily crushed, and as a whole, the easy pulverizability is poor.

Meanwhile, according to the zirconia-based powder material, $[(V_{P10-100}/(V_{P100-6000})]$ satisfies the above Formula [1], and thus both the gaps of primary particles and the gaps of secondary particles that serve as the starting points of crushing of aggregated particles can be said to be appropriately provided. Therefore, the zirconia-based powder material can be atomized by an easy crushing treatment without using a strong crushing method.

The above $[(V_{P10-100}/(V_{P100-6000})]$ is preferably 0.45 or more, and more preferably 0.5 or more. The above $[(Vp_{10-100}/(V_{P100-6000})]$ is preferably 0.9 or less, and more preferably 0.8 or less.

In the zirconia-based powder material, $[(Vp_{10-100}/(Vp_{5-6000})]$ preferably satisfies the following Formula [2]:

$$\text{Formula [2]} \quad 0.2 \leq [(Vp_{10-100})/(Vp_{5-6000})] \leq 0.5.$$

When the above $[(V_{P10-100}/(Vp_{5-6000})]$ is 0.2 or more and 0.5 or less, relatively large gaps of primary particles that serve as the starting points of crushing are appropriately included, so that the zirconia-based powder material can be more easily atomized.

Note that $Vp_{5-6000}$ is the pore volume in the entire range of the pore diameter distribution.

That is, the above $[(V_{P10-100}/(Vp_{5-6000})]$ means the ratio of the volume of pores having a pore diameter of 10 nm or more and less than 100 nm to the pore volume in the entire range.

The above $[(V_{P10-100}/(V_{PS-6000})]$ is preferably 0.25 or more, and more preferably 0.3 or more. The above $[(Vp_{10-100}/(V_{PS-6000})]$ is preferably 0.45 or less, and more preferably 0.4 or less.

In the zirconia-based powder material, $[(V_{P5-10}/(Vp_{5-6000})]$ preferably satisfies the following Formula [3]:

$$\text{Formula [3]} \quad 0.001 \leq [(Vp_{5-10})/(Vp_{5-6000})] \leq 0.1.$$

When the above $[(Vp_{5-10})/(Vp_{5-6000})]$ is 0.001 or more and 0.1 or less, small gaps of primary particles (pores having a pore diameter of 5 nm or more and less than 10 nm) that inhibit crushing are sufficiently few, so that the zirconia-based powder material can be more easily atomized.

The above $[(Vp_{5-10})/(Vp_{5-6000})]$ means the ratio of the volume of pores having a pore diameter of 5 nm or more and less than 10 nm to the pore volume in the entire range of the pore diameter distribution.

The above $[(Vp_{5-10})/(V_{PS-6000})]$ is preferably 0.002 or more, and more preferably 0.003 or more. The above $[(Vp_{5-10})/(V_{PS-6000})]$ is preferably 0.007 or less, and more preferably 0.005 or less.

In the zirconia-based powder material, $[(Vp_{100-6000})/(Vp_{5-6000})]$ preferably satisfies the following Formula [4] :

$$\text{Formula [4]} \quad 0.5 \leq [(Vp_{100-6000})/(Vp_{5-6000})] \leq 0.8.$$

When the above $[(Vp_{100-6000})/(Vp_{5-6000})]$ is 0.5 or more and 0.8 or less, relatively large gaps of secondary particles that serve as the starting points of crushing are appropriately included, and the zirconia-based powder material can be more easily atomized.

The above $[(Vp_{100-6000})/(V_{PS-6000})]$ means the ratio of the volume of pores having a pore diameter of 100 nm or more and less than 6000 nm to the pore volume in the entire range of the pore diameter distribution.

The $[(Vp_{100-6000})/(V_{PS-6000})]$ is preferably 0.55 or more, and more preferably 0.6 or more. The above $[(Vp_{100-6000})/(V_{PS-6000})]$ is preferably 0.75 or less, and more preferably 0.7 or less.

The above $Vp_{5-10}$ is preferably 0 mL/g or more and 0.1 mL/g or less. When the above $Vp_{5-10}$ is 0.001 mL/g or more and 0.1 mL/g or less, the gaps of primary particles that inhibits crushing are sufficiently few, so that the zirconia-based powder material can be more easily atomized. The above $Vp_{5-10}$ is more preferably 0.001 mL/g or more, still more preferably 0.002 mL/g or more, and particularly preferably 0.003 mL/g or more. The above $Vp_{5-10}$ is more preferably 0.05 mL/g or less, and still more preferably 0.03 mL/g or less.

The above $V_{P10-100}$ is preferably 0.3 mL/g or more and 0.8 mL/g or less. When the above $V_{P10-100}$ is 0.3 mL/g or more and 0.8 mL/g or less, relatively large gaps of primary particles that serve as the starting points of crushing are appropriately included, so that the zirconia-based powder material can be more easily atomized. The $V_{P10-100}$ is more preferably 0.4 mL/g or more, and still more preferably 0.5 mL/g or more. $V_{P10-100}$ is more preferably 0.75 mL/g or less, still more preferably 0.70 mL/g or less, and still more preferably 0.65 mL/g or less.

The above $Vp_{5-6000}$ is preferably 0.5 mL/g or more and 2 mL/g or less. When the above $Vp_{5-6000}$ is 0.5 mL/g or more and 2 mL/g or less, the zirconia-based powder material can be said to have many pores that serve as the starting points of cracks. Therefore, the zirconia-based powder material can be more easily atomized. The above $Vp_{5-6000}$ is more preferably 0.7 mL/g or more, and still more preferably 0.9 mL/g or more. The above $Vp_{5-6000}$ is more preferably 1.8 mL/g or less, and still more preferably 1.6 mL/g or less.

The above $V_{P100-6000}$ is preferably 0.5 mL/g or more and 1.1 mL/g or less. When the above $V_{P100-6000}$ is 0.5 mL/g or more and 1.1 mL/g or less, relatively large gaps of primary particles that serve as the starting points of crushing are appropriately included, so that the zirconia-based powder material can be more easily atomized. The above $V_{P100-6000}$ is more preferably 0.6 mL/g or more, and still more preferably 0.7 mL/g or more. $V_{P100-6000}$ is more preferably 1.05 mL/g or less, and still more preferably 1 mL/g or less.

The above $V_{P5-10}$, the above $V_{P10-100}$, the above $V_{P5-6000}$, and the above $V_{P100-6000}$ refer to values obtained by the method described in Examples.

The above $Vp_{5-10}$ refers to a pore volume in the range of a pore diameter of 5 nm or more and less than 10 nm.

The above $V_{P10-100}$ refers to a pore volume in the range of a pore diameter of 10 nm or more and less than 100 nm.

The above $Vp_{5-6000}$ refers to a pore volume in the range of a pore diameter of 5 nm or more and less than 6000 nm.

The above $V_{P100-6000}$ refers to a pore volume in the range of a pore diameter of 100 nm or more and less than 6000 nm.

The zirconia-based powder material preferably has a particle diameter $D_{50}$ (hereinafter, also referred to as particle diameter $D_{50-after}$) of 0.05 um or more and 1.5 um or less after the following crushing treatment.

<Crushing treatment>

0.1 g of the zirconia-based powder is charged into 40 mL of pure water, and subjected to a homogenizer treatment for 5 minutes under the following crushing condition using an ultrasonic homogenizer manufactured by BRANSON: product name Digital Sonifier 250 type:

<Crushing condition>

oscillation frequency: 20 kHz;
high frequency output: 200 W; and
amplitude control: 40 ± 5%.

The crushing treatment is a crushing treatment under a relatively gentle condition. When the particle diameter $D_{50\text{-after}}$ is 1.5 um or less, fine particles can be said to be easily obtained by a gentle crushing treatment.

The particle diameter $D_{50\text{-after}}$ is more preferably 0.1 um or more, and still more preferably 0.2 um or more. The particle diameter $D_{50\text{-after}}$ is more preferably 1.2 um or less, and still more preferably 1.1 um or less.

The zirconia-based powder material preferably has a particle diameter $D_{50}$ (hereinafter, also referred to as a particle diameter $D_{50\text{-before}}$) of 1 um or more and 400 um or less before the crushing treatment. The particle diameter $D_{50\text{-before}}$ is more preferably 5 um or more, and still more preferably 10 um or more. The particle diameter $D_{50\text{-before}}$ is more preferably 100 um or less, and still more preferably 50 um or less.

The zirconia-based powder material preferably has a particle size change rate represented by the following Formula (A) of 95% or more:

[Particle size change rate (%)] = 100-([particle diameter $D_{50\text{-after}}$]/[particle diameter $D_{50\text{-before}}$])$\times$100

The crushing treatment is a crushing treatment under a relatively gentle condition. When the particle size change rate is 95% or more, the zirconia-based powder material is greatly atomized by the gentle crushing treatment. Therefore, the zirconia-based powder material can be said to be easily atomized.

The particle size change rate is more preferably 96% or more, and still more preferably 98% or more. The particle size change rate is preferably as large as possible, and is, for example, 99.5% or less or 99% or less, or the like.

The zirconia-based powder material preferably has a particle diameter $D_{10}$ (hereinafter, also referred to as particle diameter $D_{10\text{-after}}$) of 0.05 um or more and 1 um or less after the following crushing treatment. The particle diameter $D_{10\text{-after}}$ is more preferably 0.1 um or more, and still more preferably 0.15 um or more. The particle diameter $D_{10\text{-after}}$ is more preferably 0.8 um or less, and still more preferably 0.6 um or less.

When the particle diameter $D_{10\text{-after}}$ is 1 um or less, the zirconia-based powder material can be said to be greatly atomized by the following crushing treatment. Therefore, the zirconia-based powder material can be said to be easily atomized.

<Crushing treatment>

0.1 g of the zirconia-based powder material is charged into 40 mL of pure water, and subjected to a homogenizer treatment for 5 minutes under the following crushing condition using an ultrasonic homogenizer manufactured by BRANSON: product name Digital Sonifier 250 type:

<Crushing condition>

oscillation frequency: 20 kHz;
high frequency output: 200 W; and
amplitude control: 40 ± 5%.

The zirconia-based powder material preferably has a particle diameter $D_{10}$ (hereinafter, also referred to as a particle diameter $D_{10\text{-before}}$) of 0.8 um or more and 150 um or less before the crushing treatment. The particle diameter $D_{10\text{-before}}$ is more preferably 1 um or more, and still more preferably 1.2 um or more. The particle diameter $D_{10\text{-before}}$ is more preferably 100 um or less, and still more preferably 50 um or less.

The zirconia-based powder material preferably has a particle diameter $D_{90}$ (hereinafter, also referred to as particle diameter $D_{90\text{-after}}$) of 0.1 um or more and 3.5 um or less after the crushing treatment. The particle diameter $D_{90\text{-after}}$ is more preferably 0.2 um or more, and still more preferably 0.3 um or more. The particle diameter $D_{90\text{-after}}$ is more preferably 3 um or less, and still more preferably 2.5 um or less.

When the particle diameter $D_{90\text{-after}}$ is 3.5 um or less, the following crushing treatment can be said to cause no coarse particles to remain. Therefore, the zirconia-based powder material can be said to be easily atomized.

<Crushing treatment>

0.1 g of the zirconia-based powder material is charged into 40 mL of pure water, and subjected to a homogenizer treatment for 5 minutes under the following crushing condition using an ultrasonic homogenizer manufactured by BRANSON: product name Digital Sonifier 250 type:

<Crushing condition>

oscillation frequency: 20 kHz;
high frequency output: 200 W; and
amplitude control: 40 ± 5%.

The zirconia-based powder material preferably has a particle diameter $D_{90}$ (hereinafter, also referred to as particle diameter $D_{90\text{-before}}$) of 10 um or more and 600 um or less before the crushing treatment. The particle diameter $D_{90\text{-before}}$ is more preferably 15 um or more, and still more preferably 20 um or more. The particle diameter $D_{90\text{-before}}$ is more preferably 300 um or less, and still more preferably 100 um or less.
The zirconia-based powder material preferably has a mode diameter of 0.05 um or more and 1.5 um or less after the crushing treatment. The mode diameter after the crushing treatment is more preferably 0.1 um or more, and still more preferably 0.15 um or more. The mode diameter before the crushing treatment is more preferably 1 um or less, and still more preferably 0.8 um or less.
When the mode diameter after the crushing treatment is 1.5 um or less, the zirconia-based powder material can be said to be greatly atomized by the following crushing treatment. Therefore, the zirconia-based powder material can be said to be easily atomized.

<Crushing treatment>

0.1 g of the zirconia-based powder material is charged into 40 mL of pure water, and subjected to a homogenizer treatment for 5 minutes under the following crushing condition using an ultrasonic homogenizer manufactured by BRANSON: product name Digital Sonifier 250 type:

<Crushing condition>

oscillation frequency: 20 kHz;
high frequency output: 200 W; and
amplitude control: 40 ± 5%.

The zirconia-based powder material preferably has a mode diameter of 3 um or more and 500 um or less before the crushing treatment. The mode diameter before the crushing treatment is more preferably 5 um or more, and still more preferably 7 um or more. The mode diameter before the crushing treatment is more preferably 400 um or less, and still more preferably 300 um or less.
The zirconia-based powder material preferably has an average particle diameter of 0.1 um or more and 1.3 um or less after the following crushing treatment. The average particle diameter after the crushing treatment is more preferably 0.15 um or more, and still more preferably 0.2 um or more. The average particle diameter after the crushing treatment is more preferably 1.1 um or less, and still more preferably 0.9 um or less.
When the average particle diameter after the crushing treatment is 1.3 um or less, the zirconia-based powder material can be said to be greatly atomized by the following crushing treatment. Therefore, the zirconia-based powder material can be said to be easily atomized.

<Crushing treatment>

0.1 g of the zirconia-based powder material is charged into 40 mL of pure water, and subjected to a homogenizer treatment for 5 minutes under the following crushing condition using an ultrasonic homogenizer manufactured by BRANSON: product name Digital Sonifier 250 type:

<Crushing condition>

oscillation frequency: 20 kHz;
high frequency output: 200 W; and
amplitude control: 40 ± 5%.

The zirconia-based powder material preferably has an average particle diameter of 5 um or more and 300 um or less before the crushing treatment. The average particle diameter before the crushing treatment is more preferably 7 um or more, and still more preferably 10 um or more. The average particle diameter before the crushing treatment is more preferably 200 um or less, and still more preferably 100 um or less.

The particle diameter $D_{50\text{-before}}$, the particle diameter $D_{50\text{-after}}$, the particle diameter $D_{10\text{-before}}$, the particle diameter $D_{10\text{-after}}$, the particle diameter $D_{90\text{-before}}$, the particle diameter $D_{90\text{-after}}$, the mode diameter before the crushing treatment, the mode diameter after the crushing treatment, the average particle diameter before the crushing treatment, and the average particle diameter after the crushing treatment refer to values obtained by the method described in Examples.

<Composition>

The zirconia-based powder material contains zirconia. The content of the zirconia is preferably 80% or more, and more preferably 90% by mass or more when the entire zirconia-based powder material is 100% by mass. The upper limit value of the content of the zirconia is not particularly limited, but the upper limit of the content of the zirconia is not particularly limited, and may be 95% by mass or less, 92% by mass or less, or 90% by mass or less or the like. The zirconia-based powder material may be composed of only zirconia. That is, the content of the zirconia in the zirconia-based powder material may be 1000 by mass when the entire zirconia-based powder material is 100% by mass.

When the content of the zirconia is 80% by mass or more, the disintegrability can be highly maintained.

The zirconia-based powder material may contain one or more selected from the group consisting of a transition element except Zr, an alkali metal element, and an alkaline earth metal element.

When the zirconia-based powder material contains the transition element, the transition element is preferably contained as an oxide of the transition element.

When the zirconia-based powder material contains the alkali metal element, the alkali metal element is preferably contained as an oxide of the alkali metal element.

When the zirconia-based powder material contains the alkaline earth metal element, the alkaline earth metal element is preferably contained as an oxide of the alkaline earth metal element.

When the zirconia-based powder material contains the transition element except Zr, the alkali metal element, or the alkaline earth metal element, characteristics corresponding to the contained element are exhibited, and the zirconia-based powder material can be applied to various applications (for example, a catalyst application, a fine ceramic application, and an electronic material application and the like).

Among these, the transition element is preferably La, Ce, Nd, Y, Sc, Ti, Fe, Nb, Gd, Pr, Hf, Ta, and W.

Among these, the alkaline earth metal element is preferably Mg, Ca, Sr, and Ba.

Among these, the alkali metal element is preferably Li and Na.

When the zirconia-based powder material contains one or more selected from the group consisting of a transition element except Zr, an alkali metal element, and an alkaline earth metal element, the content of the one or more is preferably 20% by mass or less with respect to the zirconia-based powder material in terms of oxide. By setting the content to 20% by mass or less, it is possible to prevent the disintegrability from greatly deteriorating.

The application of the zirconia-based powder material is not particularly limited, and examples thereof include a composite application with an electrode active material for the purpose of stabilizing the structure of the electrode active material in a lithium ion secondary battery, and an inorganic filler application for improving the heat resistance and the like of a separator. Since the zirconia-based powder material has a fragile agglomerated structure and can be easily atomized, for example, in the application of compounding the zirconia-based powder material and other material, the zirconia-based powder material and the other material can be easily and uniformly compounded.

[Method for producing zirconia-based powder material]

Hereinafter, an example of a method for producing a zirconia-based powder material will be described. However, the method for producing a zirconia-based powder material of the present invention is not limited to the following examples.

The method for producing a zirconia-based powder material according to the present embodiment includes:

a step 1 of heating a zirconium salt solution having a Zr concentration of 0.5 M or more and 2.0 M or less to 60°C or higher and 90°C or lower;
a step 2 of heating a sulfating agent solution to 60°C or higher and 90°C or lower;
a step 3 of bringing the zirconium salt solution after heating into contact with the sulfating agent solution after heating and immediately charging the zirconium salt solution and the sulfating agent solution into an alkali solution to obtain a basic zirconium sulfate-containing slurry;
a step 4 of neutralizing the basic zirconium sulfate-containing slurry to produce zirconium hydroxide; and
a step 5 of obtaining a zirconia-based powder material by heat-treating the zirconium hydroxide.

Hereinafter, each of the steps will be described in detail.

<Step 1>

In the step 1, a zirconium salt solution having a Zr concentration of 0.5 M or more and 2.0 M or less is heated to 60°C or higher and 90°C or lower.

The zirconium salt to be used for preparing the zirconium salt solution may be any one that supplies zirconium ions, and for example, zirconium oxynitrate, zirconium oxychloride, and zirconium nitrate and the like can be used. One or two or more thereof may be used. Among these, zirconium oxychloride is preferable in terms of its high productivity on an industrial scale.

The solvent to be used for forming the zirconium salt solution may be chosen according to the type, etc. of the zirconium salt. Usually, water (pure water or ion-exchanged water, the same applies hereinafter) is preferable.

As described above, the concentration of the zirconium salt solution is set to a Zr concentration of 0.5 M or more and 2.0 M or less. By setting the concentration of the zirconium salt solution to 0.5 M or more and 2.0 M or less, the production rate of basic zirconium sulfate particles (ZBS particles) produced when the zirconium salt solution is brought into contact with the sulfating agent solution can be slowed down, and the growth of the ZBS particles can be moderately suppressed. The Zr concentration of the zirconium salt solution is preferably 1.8 M or less, and more preferably 1.6 M or less, from the viewpoint of moderately suppressing the growth of the ZBS particles. The Zr concentration of the zirconium salt solution is preferably 0.7 M or more, and more preferably 1.0 M or more, from the viewpoint that the production of the ZBS particles is not excessively suppressed.

The value of the above formula [1] increases as the Zr concentration increases within the above numerical range, and the value of the above formula [1] decreases as the Zr concentration decreases.

As described above, in the step 1, the zirconium salt solution is heated to 60°C or higher and 90°C or lower. By setting the temperature of the zirconium salt solution to 60°C or higher and 90°C or lower, the production rate of basic zirconium sulfate particles (ZBS particles) produced when the zirconium salt solution is brought into contact with the sulfating agent solution can be slowed down, and the growth of the ZBS particles can be moderately suppressed. The temperature of the zirconium salt solution is preferably 85°C or lower, and more preferably 80°C or lower, from the viewpoint of moderately suppressing the growth of the ZBS particles. The temperature of the zirconium salt solution is preferably 65°C or higher, and more preferably 70°C or higher, from the viewpoint that the production of the ZBS particles is not excessively suppressed.

The value of the above formula [1] decreases as the temperature of the zirconium salt solution increases within the above numerical range, and the value of the above formula [1] increases as the temperature of the zirconium salt solution decreases.

<Step 2>

In the step 2, the sulfating agent solution is heated to 60°C or higher and 90°C or lower. The step 2 may be performed in parallel with the step 1.

The sulfating agent may be any one that reacts with zirconium ions to produce a sulfate (that is, a sulfating reagent), and examples thereof include sulfuric acid, sodium sulfate, potassium sulfate, ammonium sulfate, potassium hydrogen sulfate, sodium hydrogen sulfate, potassium disulfate, sodium disulfate, and sulfur trioxide. The sulfating agent may be in any form such as a powder or a solution form, and a solution (especially, an aqueous solution) is preferable. As the solvent, the same solvent as the solvent to be used for preparing the zirconium salt solution can be used.

The acid concentration of the zirconium salt solution is preferably set to 0.1 to 2.0 N. By setting the acid concentration within the above range, the aggregation state of the particles constituting the zirconia-based powder material can be controlled to a suitable state. The acid concentration can be adjusted by using, for example, hydrochloric acid, nitric acid, sodium hydroxide, potassium hydroxide, sodium carbonate, or sodium hydrogen carbonate or the like.

The concentration of the sulfating agent (the sulfating agent solution) is not particularly limited, but is preferably 0.1 to 3.0 M.

As described above, in the step 2, the sulfating agent solution is heated to 60°C or higher and 90°C or lower. By setting the temperature of the sulfating agent solution to 60°C or higher and 90°C or lower, the growth rate of basic zirconium sulfate particles (ZBS particles) produced when the sulfating agent is brought into contact with the zirconium salt solution can be moderately suppressed. The temperature of the sulfating agent solution is preferably 85°C or lower, and more preferably 80°C or lower, from the viewpoint of moderately suppressing the growth of the ZBS particles. The temperature of the sulfating agent solution is preferably 65°C or higher, and more preferably 70°C or higher, from the viewpoint that the production reaction of the ZBS particles is not excessively suppressed. The temperature of the sulfating agent solution is preferably the same as the temperature of the zirconium salt solution.

The value of the above formula [1] decreases as the temperature of the sulfating agent solution increases within the above numerical range, and the value of the above formula [1] increases as the temperature of the sulfating agent solution decreases.

The containers for preparing the zirconium salt solution and the sulfating agent solution are not particularly limited with respect to their materials as long as the containers each have a capacity large enough for sufficiently stirring the zirconium salt solution and the sulfating agent solution. However, the containers preferably have equipment capable of appropriately heating such that the temperature of each solution does not fall below 60°C. For example, it is preferable to install a heater in a tube (for example, T-shaped tube 20 to be described later) or the like for supplying each solution.

<Step 3>

In the step 3, the zirconium salt solution after heating and the sulfating agent solution after heating are brought into contact with each other, and the zirconium salt solution and the sulfating agent solution are immediately charged into the alkaline solution. Thus, a basic zirconium sulfate-containing slurry is obtained.

Hereinafter, the step 3 will be described with reference to drawings.

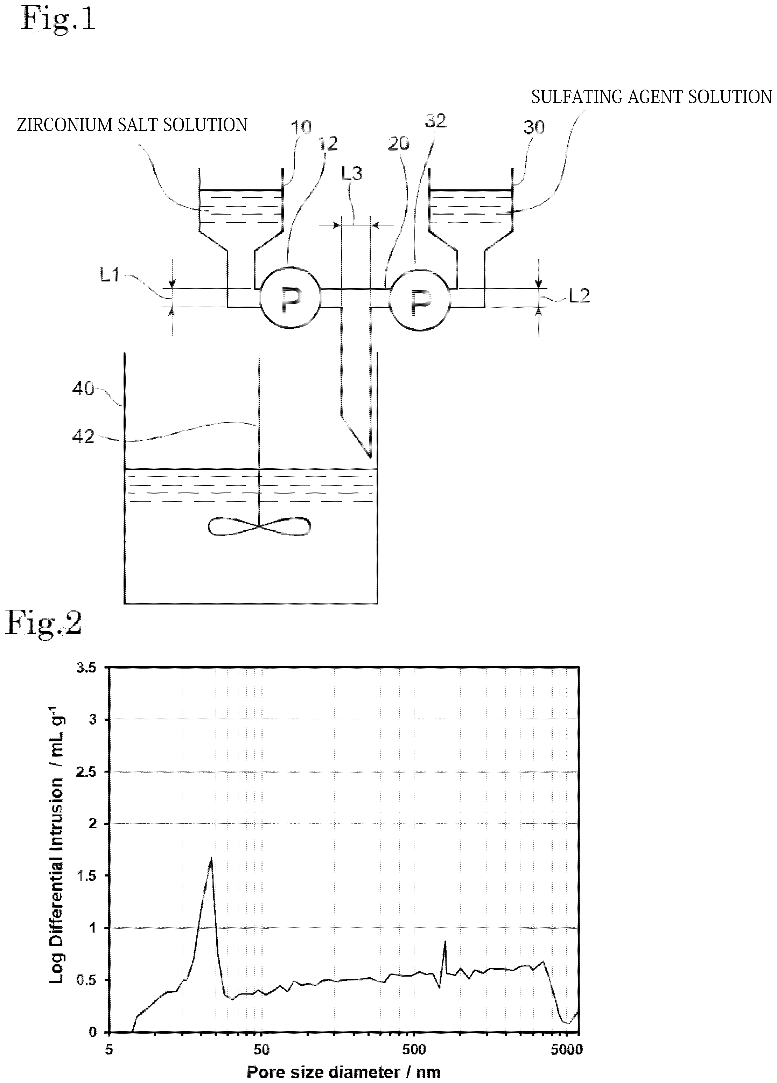

Fig. 1 is a schematic view for explaining a method for producing a zirconia-based powder material according to the present embodiment. As shown in Fig. 1, a container 10 is connected to one end (left side in Fig. 1) above the T-shaped tube 20 via a metering solution feeding pump 12. A container 30 is connected to the other end (the right side in Fig. 1) above the T-shaped tube 20 via a metering solution feeding pump 32. In the container 10 is stored a zirconium solution heated to 60°C or higher and 90°C or lower. In the container 30 is stored a sulfating agent solution heated to 60°C or higher and 90°C or lower.

A container 40 contains an alkaline solution and is disposed below the T-shaped tube 20. The alkali is not limited, and examples thereof include potassium hydroxide, sodium hydroxide, sodium carbonate, sodium hydrogen carbonate, ammonia, hydrazine, and ammonium hydrogen carbonate. The alkali solution is not particularly limited in concentration, and one diluted with water and having a concentration of 5 to 30% is usually used.

The alkali solution is preferably heated to 70°C or higher and 100°C or lower. When the temperature of the alkali solution is 70°C or higher, the formation of aggregated particles rapidly proceeds, and when the temperature of the alkali solution is 100°C or lower, a change in concentration of the solution due to the evaporation of water can be suppressed. The temperature of the alkali solution is more preferably 95°C or lower, and still more preferably 90°C or lower. The temperature of the alkali solution is more preferably 75°C or higher, and still more preferably 85°C or higher.

The value of the above formula [1] increases as the temperature of the alkali solution increases within the above numerical range, and the value of the above formula [1] decreases as the temperature of the alkali solution decreases.

In the present embodiment, a case where the zirconium solution and the sulfating agent solution are brought into contact with each other using the T-shaped tube 20, and the mixed solution is then charged into the alkali solution disposed below will be described. However, an instrument for bringing the zirconium solution and the sulfating agent solution into contact with each other is not limited to the T-shaped tube 20, and a Y-shaped tube connector made of glass, or the like may be used.

In the step 3, the zirconium solution and the sulfating agent solution are brought into contact with each other by controlling the feeding speed of the zirconium solution by the metering solution feeding pump 12 and the feeding speed of the sulfating agent solution by the metering solution feeding pump 32. The mixed solution (basic zirconium sulfate-containing reaction solution) obtained by the contact immediately flows (is charged) into the alkali solution in the container 40 from the lower side of the T-shaped tube 20.

By immediately flowing (dropping) the mixed solution (basic zirconium sulfate-containing reaction solution) obtained by bringing the zirconium solution and the sulfating agent solution into contact with each other into the alkaline solution, the formed basic zirconium sulfate particles (ZBS particles) are instantaneously neutralized and electrically aggregated, and therefore a zirconia-based powder material having a pore diameter distribution satisfying the above formula [1] can be obtained.

Specifically, the value of the above formula [1] increases as a time from contact between the zirconium solution and the sulfating agent solution to charging into the alkali solution decreases, and the value of the above formula [1] decreases as the time from the contact between the zirconium solution and the sulfating agent solution to the charging into the alkali solution increases.

The phrase "immediately charging the mixed solution into the alkali solution" means that the mixed solution is quickly charged into the alkali solution by setting the feeding speed of the zirconium solution by the metering solution feeding pump 12 and the feeding speed of the sulfating agent solution by the metering solution feeding pump 32 within appropriate ranges.

Specifically, "immediately charging the mixed solution into the alkali solution" means that the feeding speed of the zirconium solution by the metering solution feeding pump 12 is set within a range of 1 mL/min or more and 25 mL/min or less, and the feeding speed of the sulfating agent solution by the metering solution feeding pump 32 is set within a range of 0.2 mL/min or more and 5 mL/min or less, so that the mixed solution (mixed portion) obtained by bringing the zirconium salt solution and the sulfating agent solution after heating into contact with each other is directly charged into the alkali solution.

The feeding speed of the zirconium solution is more preferably 5 mL/min or more, and still more preferably 10 mL/min or more. The feeding speed of the zirconium solution is more preferably 20 mL/min or less, and still more preferably 15 mL/min or less.

The feeding speed of the sulfating agent solution is more preferably 1 mL/min or more, and still more preferably 2 mL/min or more. The feeding speed of the sulfating agent solution is more preferably 4 mL/min or less, and still more preferably 3 mL/min or less.

A tube diameter L1 (see Fig. 1) for feeding the zirconium solution is preferably 1 mm or more and 10 mm or less. The tube diameter L1 is more preferably 2 mm or more, and still more preferably 4 mm or more. The tube diameter L1 is more preferably 8 mm or less, and still more preferably 6 mm or less.

A tube diameter L2 (see Fig. 1) for feeding the sulfating agent solution is preferably 1 mm or more and 10 mm or less. The tube diameter L2 is more preferably 2 mm or more, and still more preferably 4 mm or more. The tube diameter L2 is more preferably 8 mm or less, and still more preferably 6 mm or less.

When the feeding speed of the zirconium solution by the metering solution feeding pump 12, the feeding speed of the sulfating agent solution by the metering solution feeding pump 32, the tube diameter L1, and the tube diameter L2 are within the above several ranges, it is easier to immediately charge the mixed solution into the alkaline solution.

The pH of the alkali solution is preferably adjusted to 0.8 or more and less than 3 after the whole mixed solution is added dropwise. The pH of the alkali solution is more preferably 1 or more and 2 or less, and more preferably 1.2 or more and 1.8 or less.

When the pH of the alkali solution is within the above numerical range, basic zirconium sulfate particles (ZBS particles) can be suitably precipitated.

The step 3 has been described above.

Then, when the zirconia-based powder material contains one or more selected from the group consisting of a transition element except Zr, an alkali metal element, and an alkaline earth metal element, a salt solution or a compound of one or more metals selected from the group consisting of a transition element except Zr, an alkali metal element, and an alkaline earth metal element is added to the basic zirconium sulfate-containing slurry after the step 3 and before a neutralization step (step 4) to be described later (step 3-1).

When the alkali metal element is contained, the alkali metal element may be added using an impregnation method or a solid phase method since the behavior of the alkali metal element may be different from that of a transition element except Zr or an alkaline earth metal element.

When the zirconia-based powder material contains one or more selected from the group consisting of a transition element except Zr, an alkali metal element, and an alkaline earth metal element, the content of the one or more is preferably 20% by mass or less with respect to the zirconia-based powder material in terms of oxide. By setting the content to 20% by mass or less, it is possible to prevent the disintegrability from greatly deteriorating.

<Step 4>

In the step 4, the basic zirconium sulfate-containing slurry is neutralized to produce zirconium hydroxide. Specifically, zirconium hydroxide is formed by neutralizing the basic zirconium sulfate-containing slurry with an alkali. The alkali is not limited, and for example, ammonium hydroxide, ammonium bicarbonate, sodium hydroxide, potassium hydroxide, or the like can be used. Among these, sodium hydroxide is preferable from the viewpoint of industrial cost.

The amount of the alkali added is not particularly limited as long as zirconium hydroxide can be formed as a precipitate from the basic zirconium sulfate-containing slurry solution. Usually, the alkali is added such that the pH of the solution is 11 or more, and preferably 12 or more.

After the neutralization reaction, the zirconium hydroxide-containing solution is preferably held at 35 to 60°C for 1 hour or more. As a result, the precipitate formed is aged and is rendered easy to be collected by filtration.

Next, the zirconium hydroxide is collected by a solid-liquid separation method. For example, filtration, centrifugation, and decantation and the like can be used.

After the zirconium hydroxide is collected, the zirconium hydroxide is preferably washed with water to remove impurities adhering.

The zirconium hydroxide may be dried by natural drying or heat drying.

<Step 4>

In the step 4, the zirconium hydroxide is subjected to a heat treatment (fired) to obtain a zirconia-based powder material. The heat treatment temperature is not particularly limited, but the zirconium hydroxide is preferably subjected to a heat treatment at about 380 to 900°C for about 1 to 10 hours. The heat treatment atmosphere is preferably air or an oxidizing atmosphere.

The obtained zirconia-based powder material may be subjected to a treatment for disaggregating for the purpose of improving handleability, if necessary.

The method for producing the zirconia-based powder material according to the present embodiment has been described above.

EXAMPLES

Hereinafter, the present invention will be described in detail with reference to Examples, but the present invention is not limited to the following Examples as long as the following descriptions do not depart from the gist of the present invention. Zirconia-based powder materials obtained in Examples and Comparative Examples contain 1 to 3% by mass of hafnium as unavoidable impurities with respect to zirconium (calculated by the following formula (X)).

([Mass of hafnium] / ([mass of zirconium] + [mass of hafnium])) $\times$ 100 (%)

The maximum value and minimum value of the content of each component shown in the following Examples should be considered as the preferred minimum value and maximum value of the present invention regardless of the content of other components.

In addition, the maximum value and minimum value of the measured values shown in the following Examples should be considered to be the preferred minimum value and maximum value of the present invention regardless of the content (composition) of each component.

[Preparation of zirconia-based powder material]

(Example 1)

100 mL of an aqueous zirconium oxychloride solution (Zr concentration = 1.6 M) and 35 mL of an aqueous sodium sulfate solution ($Na_2SO_4$ concentration = 1.6 M) were heated to 70°C, and 250 mL of an aqueous sodium hydroxide solution (NaOH concentration = 2.5 mM) was heated to 90°C. Thereafter, two solutions of the aqueous zirconium oxychloride solution and the aqueous sodium sulfate solution were mixed by solution feeding using a metering solution feeding pump, and then the solution obtained by mixing the two solutions was directly fed into the aqueous sodium hydroxide solution heated to 90°C.

At this time, a tygon tube having an inner diameter of 4 mm was used, and a Y-shaped tube connector made of glass was used as a confluent site of two solutions for performing a two-solution mixing reaction. The feeding speed of the aqueous zirconium oxychloride solution was 10 mL/min, and the flow speed of the aqueous sodium sulfate solution was 3.5 mL/min.

The mixture of the respective aqueous solutions was directly stirred at 90°C for 30 minutes, and an aqueous sodium hydroxide solution (NaOH concentration = 0.1 M) was then added until the pH reached 11 or more, to obtain a slurry containing zirconium hydroxide. Subsequently, the slurry was filtered off, and then washed with distilled water until the amounts of Na and Cl contained in the precipitate became less than 100 ppm, to obtain a cake containing zirconium hydroxide.

The recovered zirconium hydroxide cake was subjected to a heat treatment at 400°C for 5 hours using a box type electric furnace. The obtained fired product was loosened with a hammer type head (MF 10.2 hammer type head manufactured by IKA) to obtain a zirconia-based material powder according to Example 1.

The condition for loosening with the hammer type head was as follows.

Number of rotations: 6000 rpm
Sieve mesh size: 0.5 mm

(Example 2)

A zirconia-based powder material according to Example 2 was obtained in the same manner as in Example 1 except that the heat treatment temperature of a zirconium hydroxide cake was changed to 600°C.

(Example 3)

A zirconia-based powder material according to Example 3 was obtained in the same manner as in Example 2 except that a loosening treatment was performed by jet mill pulverization instead of a hammer type head.
The jet milling pulverization was performed under the following condition.

Model: KKJ-50 (manufactured by Kurimoto Ltd.)
Number of rotations: 6000 rpm

(Example 4)

100 mL of an aqueous zirconium oxychloride solution (Zr concentration = 1.6 M) and 35 mL of an aqueous sodium sulfate solution ($Na_2SO_4$ concentration = 1.6 M) were heated to 70°C, and 250 mL of an aqueous sodium hydroxide solution (NaOH concentration = 2.5 mM) was heated to 90°C. Thereafter, two solutions of the aqueous zirconium oxychloride solution and the aqueous sodium sulfate solution were mixed by solution feeding using a metering solution feeding pump, and then the solution obtained by mixing the two solutions was directly fed into the aqueous sodium hydroxide solution heated to 90°C.
At this time, a tygon tube having an inner diameter of 4 mm was used, and a Y-shaped tube connector made of glass was used as a confluent site of two solutions for performing a two-solution mixing reaction. The feeding speed of the aqueous zirconium oxychloride solution was 10 mL/min, and the flow speed of the aqueous sodium sulfate solution was 3.5 mL/min.
Thereafter, 10.79 mL of an aqueous cerium chloride solution (Ce concentration = 0.5 M) at room temperature (25°C) was added.
The mixture of the respective aqueous solutions was directly stirred at 90°C for 30 minutes, and an aqueous sodium hydroxide solution (NaOH concentration = 0.1 M) was then added until the pH reached 11 or more, to obtain a slurry containing zirconium hydroxide. Subsequently, the slurry was filtered off, and then washed with distilled water until the amounts of Na and Cl contained in the precipitate became less than 100 ppm, to obtain a cake containing zirconium hydroxide.
The recovered zirconium hydroxide cake was subjected to a heat treatment at 400°C for 5 hours using a box type electric furnace. The obtained fired product was loosened with a hammer type head (MF 10.2 hammer type head manufactured by IKA) to obtain a zirconia-based material powder according to Example 4.
The condition for loosening with the hammer type head was as follows.

Number of rotations: 6000 rpm
Sieve mesh size: 0.5 mm

(Example 5)

A zirconia-based powder material according to Example 5 was obtained in the same manner as in Example 4 except that 4.85 mL of an aqueous yttrium chloride solution (Y concentration = 1.0 M) was added instead of adding an aqueous cerium chloride solution.

(Example 6)

A zirconia-based powder material of Example 6 was obtained in the same manner as in Example 4 except that 2.76 mL of an aqueous lanthanum chloride solution (La concentration = 1.0 M) and 13.91 mL of an aqueous neodymium chloride solution (Nd concentration = 1.0 M) were added instead of an aqueous cerium chloride solution.

14

(Example 7)

A zirconia-based powder material of Example 7 was obtained in the same manner as Example 4 except that the addition amount of an aqueous cerium chloride solution was changed to 30.54 mL, and 11.64 mL of an aqueous yttrium chloride solution (Y concentration =1.0 M), 8.07 mL of an aqueous lanthanum chloride solution (La concentration =1.0 M), and 7.81 mL of an aqueous neodymium chloride solution (Nd concentration = 1.0 M) were added.

(Example 8)

100 mL of an aqueous zirconium oxychloride solution (Zr concentration = 1.6 M) and 35 mL of an aqueous sodium sulfate solution ($Na_2SO_4$ concentration = 1.6 M) were heated to 70°C, and 250 mL of an aqueous sodium hydroxide solution (NaOH concentration = 2.5 mM) was heated to 90°C. Thereafter, two solutions of the aqueous zirconium oxychloride solution and the aqueous sodium sulfate solution were mixed by solution feeding using a metering solution feeding pump, and then the solution obtained by mixing the two solutions was directly fed into the aqueous sodium hydroxide solution heated to 90°C.
At this time, a tygon tube having an inner diameter of 4 mm was used, and a Y-shaped tube connector made of glass was used as a confluent site of two solutions for performing a two-solution mixing reaction. The feeding speed of the aqueous zirconium oxychloride solution was 20 mL/min, and the flow speed of the aqueous sodium sulfate solution was 7 mL/min.
The mixture of the respective aqueous solutions was directly stirred at 90°C for 30 minutes, and an aqueous sodium hydroxide solution (NaOH concentration = 0.1 M) was then added until the pH reached 11 or more, to obtain a slurry containing zirconium hydroxide. Subsequently, the slurry was filtered off, and then washed with distilled water until the amounts of Na and Cl contained in the precipitate became less than 100 ppm, to obtain a cake containing zirconium hydroxide.
The recovered zirconium hydroxide cake was subjected to a heat treatment at 400°C for 5 hours using a box type electric furnace. The obtained fired product was loosened with a hammer type head (MF 10.2 hammer type head manufactured by IKA) to obtain a zirconia-based material powder according to Example 1.
The condition for loosening with the hammer type head was as follows.

Number of rotations: 6000 rpm
Sieve mesh size: 0.5 mm

(Example 9)

100 mL of an aqueous zirconium oxychloride solution (Zr concentration = 1.6 M) and 35 mL of an aqueous sodium sulfate solution ($Na_2SO_4$ concentration = 1.6 M) were heated to 70°C, and 250 mL of an aqueous sodium hydroxide solution (NaOH concentration = 2.5 mM) was heated to 90°C. Thereafter, two solutions of the aqueous zirconium oxychloride solution and the aqueous sodium sulfate solution were mixed by solution feeding using a metering solution feeding pump, and then the solution obtained by mixing the two solutions was directly fed into the aqueous sodium hydroxide solution heated to 90°C.
At this time, a tygon tube having an inner diameter of 4 mm was used, and a Y-shaped tube connector made of glass was used as a confluent site of two solutions for performing a two-solution mixing reaction. The feeding speed of the aqueous zirconium oxychloride solution was 5 mL/min, and the flow speed of the aqueous sodium sulfate solution was 1.75 mL/min.
The mixture of the respective aqueous solutions was directly stirred at 90°C for 30 minutes, and an aqueous sodium hydroxide solution (NaOH concentration = 0.1 M) was then added until the pH reached 11 or more, to obtain a slurry containing zirconium hydroxide. Subsequently, the slurry was filtered off, and then washed with distilled water until the amounts of Na and Cl contained in the precipitate became less than 100 ppm, to obtain a cake containing zirconium hydroxide.
The recovered zirconium hydroxide cake was subjected to a heat treatment at 400°C for 5 hours using a box type electric furnace. The obtained fired product was loosened with a hammer type head (MF 10.2 hammer type head manufactured by IKA) to obtain a zirconia-based material powder according to Example 1.
The condition for loosening with the hammer type head was as follows.

Number of rotations: 6000 rpm
Sieve mesh size: 0.5 mm

(Example 10)

100 mL of an aqueous zirconium oxychloride solution (Zr concentration = 1.6 M) and 35 mL of an aqueous sodium sulfate solution ($Na_2SO_4$ concentration = 1.6 M) were heated to 70°C, and 250 mL of an aqueous sodium hydroxide solution (NaOH concentration = 2.5 mM) was heated to 96°C. Thereafter, two solutions of the aqueous zirconium oxychloride solution and the aqueous sodium sulfate solution were mixed by solution feeding using a metering solution feeding pump, and then the solution obtained by mixing the two solutions was directly fed into the aqueous sodium hydroxide solution heated to 96°C.

At this time, a tygon tube having an inner diameter of 4 mm was used, and a Y-shaped tube connector made of glass was used as a confluent site of two solutions for performing a two-solution mixing reaction. The feeding speed of the aqueous zirconium oxychloride solution was 10 mL/min, and the flow speed of the aqueous sodium sulfate solution was 3.5 mL/min.

The mixture of the respective aqueous solutions was directly stirred at 96°C for 30 minutes, and an aqueous sodium hydroxide solution (NaOH concentration = 0.1 M) was then added until the pH reached 11 or more, to obtain a slurry containing zirconium hydroxide. Subsequently, the slurry was filtered off, and then washed with distilled water until the amounts of Na and Cl contained in the precipitate became less than 100 ppm, to obtain a cake containing zirconium hydroxide.

The recovered zirconium hydroxide cake was subjected to a heat treatment at 400°C for 5 hours using a box type electric furnace. The obtained fired product was loosened with a hammer type head (MF 10.2 hammer type head manufactured by IKA) to obtain a zirconia-based material powder according to Example 1.

The condition for loosening with the hammer type head was as follows.

    Number of rotations: 6000 rpm
    Sieve mesh size: 0.5 mm

(Comparative Example 1)

155 g (60 g in terms of $ZrO_2$) of zirconium oxychloride-octahydrate was dissolved in ion-exchanged water, and an acid concentration and a $ZrO_2$ concentration were then respectively adjusted to 0.67 N and 4 w/v% (mass-volume percent concentration) by 35 mass% hydrochloric acid and ion-exchanged water to obtain a zirconium salt solution.

The obtained zirconium salt solution was placed in an autoclave, and heated to 130°C. After the zirconium salt solution was heated to 130°C, 1065 g of 5% sodium sulfate (sulfating agent) was immediately added thereto at a pressure of $1.3 \times 10^5$ Pa, followed by directly holding for 15 minutes. A time from the start of temperature rise until the temperature reached 130°C was 1 hour. Then, the solution was allowed to cool to room temperature (25°C) to obtain a basic zirconium sulfate-containing slurry.

Next, 500 g of 25% sodium hydroxide (alkali for neutralization) was added over 60 minutes to form a hydroxide precipitate.

The obtained hydroxide precipitate was filtered, and sufficiently washed with water. The obtained hydroxide was dried at 105°C for 24 hours. The dried hydroxide was subjected to a heat treatment (fired) at 600°C in air for 5 hours. The obtained fired product was loosened with a hammer type head (MF 10.2 hammer type head manufactured by IKA) to obtain a zirconia-based powder material according to Comparative Example 1.

The condition for loosening with the hammer type head was as follows.

    Number of rotations: 6000 rpm
    Sieve mesh size: 0.5 mm

(Comparative Example 2)

A zirconia-based powder material according to Comparative Example 2 was obtained in the same manner as in Example 1 except that the concentration of an aqueous zirconium oxychloride solution was changed to Zr concentration = 2.2 M.

(Comparative Example 3)

155 g (60 g in terms of $ZrO_2$) of zirconium oxychloride-octahydrate was dissolved in ion-exchanged water, and an acid concentration and a $ZrO_2$ concentration were then respectively adjusted to 0.67 N and 4 w/v% (mass-volume percent concentration) by 35 mass% hydrochloric acid and ion-exchanged water to obtain a zirconium salt solution.

The obtained zirconium salt solution was placed in an autoclave, and heated to 130°C. After the zirconium salt solution was heated to 130°C, the zirconium salt solution was held at a pressure of $1.3 \times 10^5$ Pa for 2 days (48 hours). A time from the start of temperature rise until the temperature reached 130°C was 1 hour.

After 2 days, 1065 g of 5% sodium sulfate (sulfating agent) was added in an autoclave held under a condition of 130°C and $1.3 \times 10^5$ Pa, followed by directly holding for 15 minutes. Then, the solution was allowed to cool to room temperature (25°C) to obtain a basic zirconium sulfate-containing slurry.

To the obtained basic zirconium sulfate-containing slurry, 300 g of a cerium nitrate solution (30 g in terms of $CeO_2$), 50 g of a lanthanum nitrate solution (5 g in terms of $La_2O_3$), and 50 g of a neodymium nitrate solution (5 g in terms of $Nd_2O_3$) were added.

Next, 500 g of 25% sodium hydroxide (alkali for neutralization) was added over 60 minutes to form a hydroxide precipitate.

The obtained hydroxide precipitate was filtered, and sufficiently washed with water. The obtained hydroxide was dried at 105°C for 24 hours. The dried hydroxide was subjected to a heat treatment (fired) at 600°C in air for 5 hours. The obtained fired product was loosened with a hammer type head (MF 10.2 hammer type head manufactured by IKA) to obtain a zirconia-based powder material according to Comparative Example 3.

The condition for loosening with the hammer type head was as follows.

Number of rotations: 6000 rpm
Sieve mesh size: 0.5 mm

[Measurement of pore volume]

The pore distribution of the zirconia-based powder material of each of Examples and Comparative Examples was obtained by a mercury intrusion method using a pore distribution measuring apparatus ("Autopore IV9500" manufactured by Micromeritics Instrument Corporation). The measurement condition was set as follows.

<Measurement condition>

Measuring apparatus: pore distribution measuring apparatus (Autopore IV9500 manufactured by Micromeritics Instrument Corporation)
Measurement range: 0.0036 to 10.3 um
Number of measurement points: 120 points
Mercury contact angle: 140 degrees
Mercury surface tension: 480 dyne/cm

Using the obtained pore distribution, $Vp_{5-10}$, $Vp_{10-100}$, $Vp_{5-6000}$, and $Vp_{100-6000}$ were obtained. The results are shown in Table 1.

In Table 1, values of $[(Vp_{10-100}) / (Vp_{100-6000})]$, $[(Vp_{10-100})/(Vp_{5-6000})]$, $[(Vp_{5-10})/(Vp_{5-6000})]$, and $[(Vp_{100-6000})/(Vp_{5-6000})]$ are also shown.

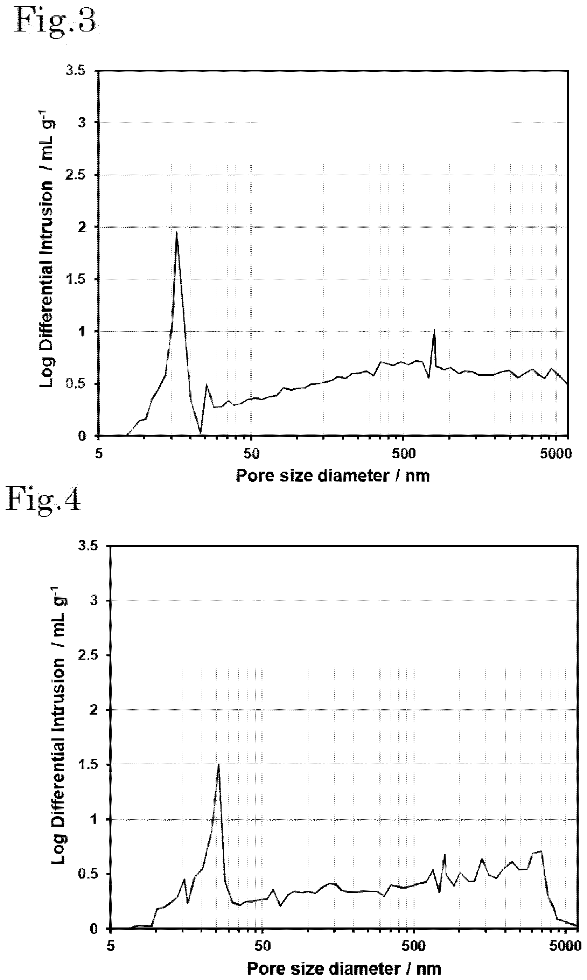

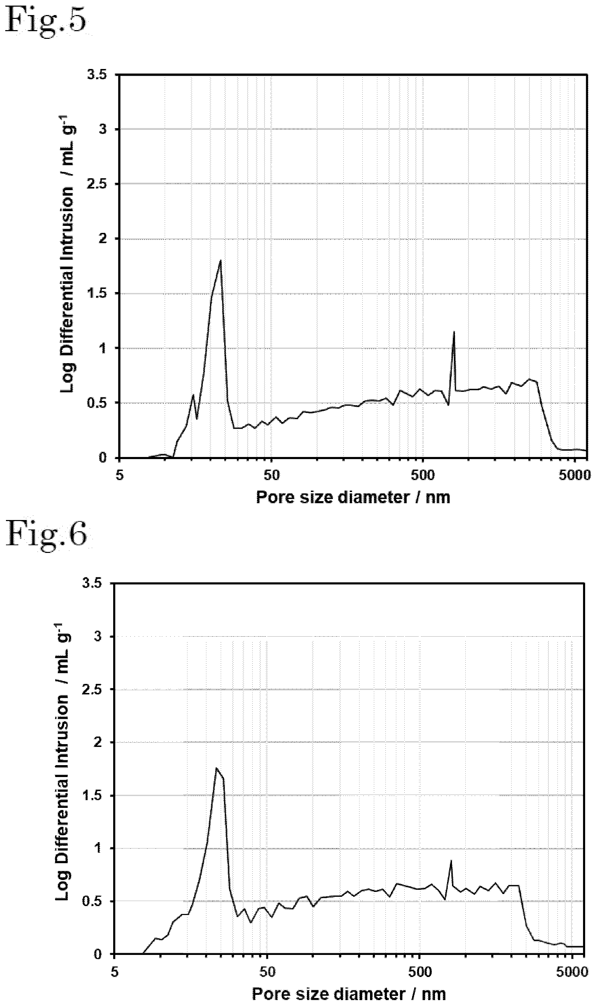

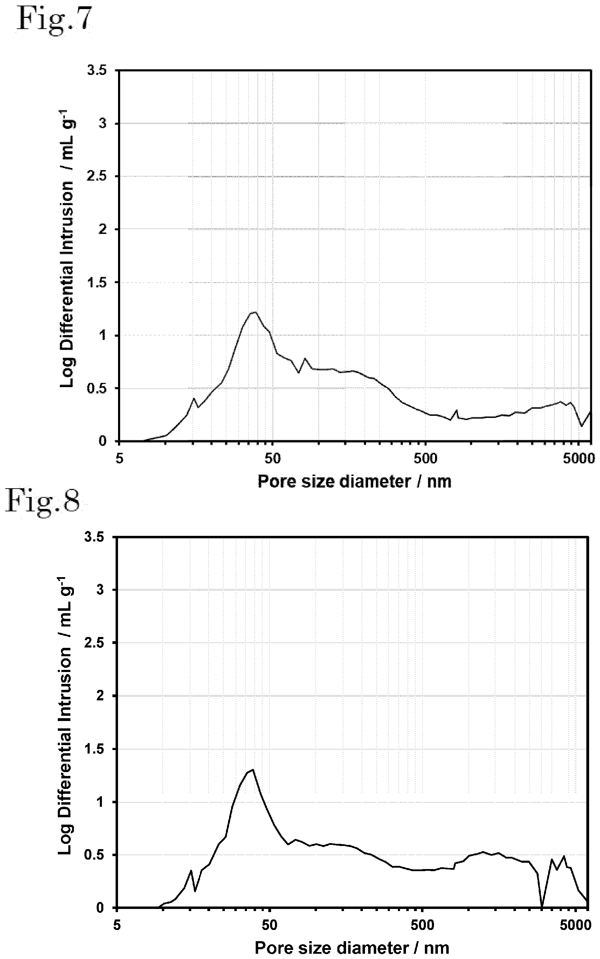

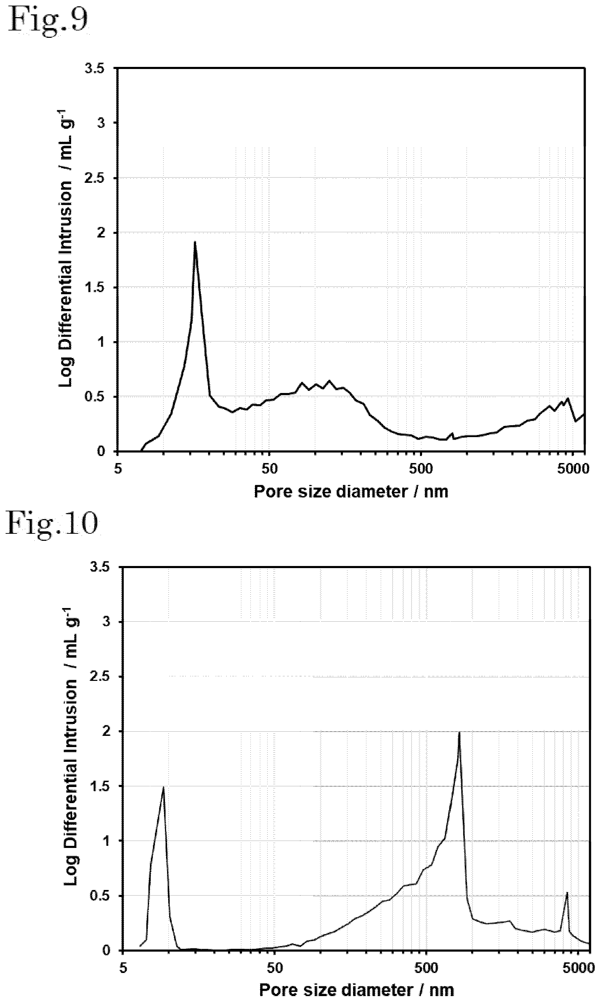

Figs. 2 to 11 show the pore distributions of the zirconia-based powder materials of Examples 1 to 7 and Comparative Examples 1 to 3.

[Measurement of particle diameter $D_{50}$ (particle diameter $D_{50-before}$) before crushing treatment, particle diameter $D_{10}$ (particle diameter $D_{10-before}$) before crushing treatment, particle diameter $D_{90}$ (particle diameter $D_{90-before}$) before crushing treatment, mode diameter before crushing treatment, and average particle diameter before crushing treatment]

The particle diameter of the zirconia-based powder material of each of Examples and Comparative Examples was measured using a laser diffraction/scattering particle diameter distribution measuring apparatus "LA-950" (manufactured by HORIBA, Ltd.). More specifically, 0.15 g of a sample was charged into the apparatus (laser diffraction/scattering type particle diameter distribution measuring apparatus "LA-950") and measured.

The measurement condition was set as follows. The results are shown in Table 1.

Refractive index: 2.4
Particle diameter standard: volume
Measurement upper limit: 3,000 um
Measurement lower limit: 0.01 um

[Measurement of particle diameter $D_{50}$ after crushing treatment (particle diameter $D_{50-after}$), particle diameter

$D_{10}$ after crushing treatment (particle diameter $D_{10\text{-after}}$), particle diameter $D_{90}$ after crushing treatment (particle diameter $D_{90\text{-after}}$), mode diameter after crushing treatment, and average particle diameter after crushing treatment]

The zirconia-based powder materials of Examples and Comparative Examples were crushed according to the following crushing treatment.

<Crushing treatment>

0.1 g of the zirconia-based powder material is charged to 40 mL of pure water, and a homogenizer treatment was performed for 5 minutes under the following <crushing condition> using an ultrasonic homogenizer, product name Digital Sonifier model 250 manufactured by Branson:

<Crushing condition>

oscillation frequency: 20 kHz;
high frequency output: 200 W; and
amplitude control: 40 ± 5%.

The particle diameter of each of the zirconia-based powder materials after the crushing treatment was measured. The measurement method was the same as the method for measuring the particle diameter of each of the zirconia-based powder materials before the crushing treatment. The results are shown in Table 1.

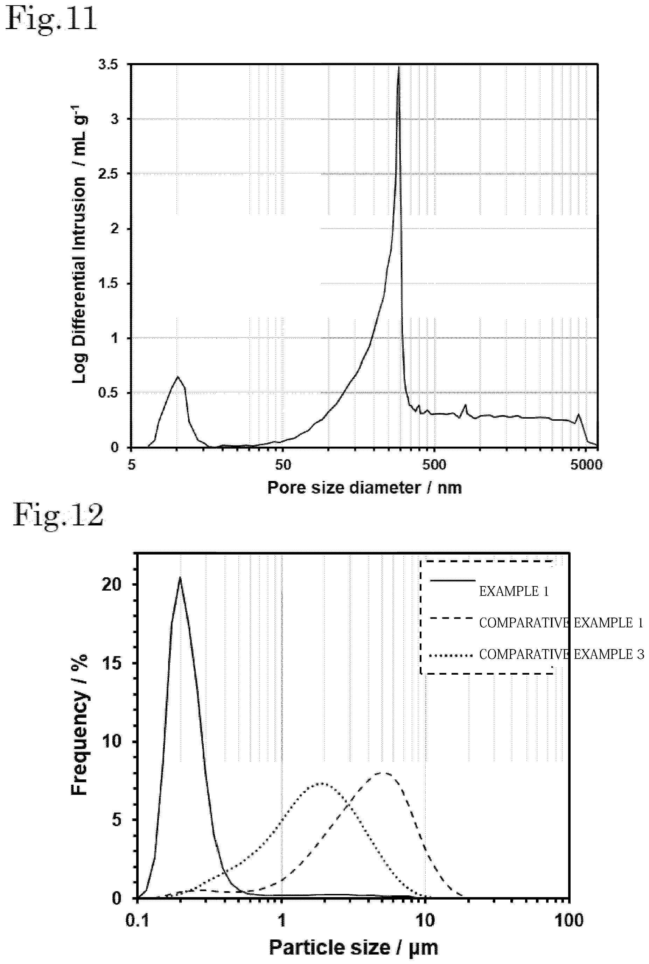

Fig. 12 is the particle diameter distribution of the zirconia-based powder material of each of Example 1, Comparative Example 1, and Comparative Example 3 after the crushing treatment.

As can be seen from Table 1 and Fig. 12, the particle diameter $D_{50}$ of Examples after the homogenizer crushing treatment is extremely smaller than that of Comparative Examples after the homogenizer crushing treatment. Therefore, it can be said that the zirconia-based powder materials of Examples are subjected to an easy crushing treatment to be more likely to obtain fine particles as compared with the zirconia-based powder materials of Comparative Examples.

Fig. 12 also shows that the zirconia-based powder material of Example 1 has a sharp particle size distribution shape, and a powder having a uniform particle diameter is obtained by crushing. Although not shown, it was confirmed that the zirconia-based powder materials of Examples other than Example 1 also have a particle diameter distribution with a sharp particle size distribution shape, similarly to the zirconia-based powder material of Example 1.

[Table 1]

| | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|
| $ZrO_2$ (mass%) | 100 | 100 | 100 | 95.5 | 97.3 | 87.6 | 75 | 100 | 100 | 100 | 100 | 100 | 60 |
| $CeO_2$ (mass%) | 0 | 0 | 0 | 4.5 | 0 | 0 | 10 | 0 | 0 | 0 | 0 | 0 | 30 |
| $Y_2O_3$ (mass%) | 0 | 0 | 0 | 0 | 2.7 | 0 | 5 | 0 | 0 | 0 | 0 | 0 | 0 |
| $La_2O_3$ (mass%) | 0 | 0 | 0 | 0 | 0 | 2.0 | 5 | 0 | 0 | 0 | 0 | 0 | 5 |
| $Nd_2O_3$ (mass%) | 0 | 0 | 0 | 0 | 0 | 10.4 | 5 | 0 | 0 | 0 | 0 | 0 | 5 |
| $Vp_{5-6000}$ (mL/g) | 1.49 | 1.58 | 1.14 | 1.39 | 1.49 | 1.36 | 1.41 | 0.90 | 1.43 | 1.20 | 1.27 | 0.81 | 1.13 |
| $Vp_{5-10}$ (mL/g) | 0.023 | 0.006 | 0.004 | 0.000 | 0.010 | 0.000 | 0.000 | 0.018 | 0.043 | 0.072 | 0.130 | 0.011 | 0.002 |
| $Vp_{10-100}$ (mL/g) | 0.56 | 0.51 | 0.40 | 0.49 | 0.60 | 0.68 | 0.64 | 0.38 | 0.40 | 0.46 | 0.62 | 0.04 | 0.24 |
| $Vp_{100-6000}$ (mL/g) | 0.91 | 1.07 | 0.73 | 0.90 | 0.88 | 0.68 | 0.77 | 0.50 | 0.99 | 0.90 | 0.52 | 0.76 | 0.89 |
| $Vp_{5-10}$ / $Vp_{5-6000}$ | 0.016 | 0.004 | 0.003 | 0.000 | 0.007 | 0.000 | 0.000 | 0.020 | 0.030 | 0.050 | 0.102 | 0.014 | 0.283 |
| $Vp_{10-100}$ / $Vp_{5-6000}$ | 0.37 | 0.32 | 0.35 | 0.35 | 0.40 | 0.50 | 0.45 | 0.42 | 0.28 | 0.32 | 0.49 | 0.05 | 0.21 |
| $Vp_{100-6000}$ / $Vp_{5-6000}$ | 0.61 | 0.68 | 0.64 | 0.65 | 0.59 | 0.50 | 0.55 | 0.56 | 0.69 | 0.63 | 0.41 | 0.94 | 0.79 |
| $Vp_{10-100}$ / $Vp_{100-6000}$ | 0.61 | 0.47 | 0.55 | 0.54 | 0.68 | 1.00 | 0.83 | 0.75 | 0.41 | 0.51 | 1.19 | 0.05 | 0.27 |
| $D_{50}$ (um) Before crushing treatment | 18.60 | 330.05 | 25.14 | 6.68 | 6.84 | 63.80 | 29.90 | 253.28 | 98.20 | 53.20 | ND | 175.28 | 3.86 |
| $D_{50}$ (um) After crushing treatment | 0.20 | 0.81 | 0.67 | 0.21 | 0.22 | 0.92 | 0.96 | 0.78 | 0.73 | 0.29 | 3.79 | 1.55 | 1.58 |
| $D_{50}$ (um) Particle size change rate before and after crushing (%) | 98.94 | 99.75 | 97.35 | 96.86 | 96.78 | 98.56 | 96.79 | 99.69 | 99.26 | 99.45 | - | 99.12 | 58.95 |

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|
| $D_{10}$ (um) | Before crushing treatment | 1.90 | 128.48 | 1. 32 | 2.15 | 2.41 | 7.37 | 4.90 | 98 . 60 | 10.03 | 5.43 | ND | 56.53 | 1.09 |
| | After crushing treatment | 0. 15 | 0.40 | 0.40 | 0.15 | 0.15 | 0.42 | 0.32 | 0.58 | 0.47 | 0.19 | 1.22 | 0.50 | 0.52 |
| $D_{90}$ (um) | Before crushing treatment | 61.04 | 521.12 | 61.84 | 18 .37 | 21.63 | 178.70 | 135.40 | 399.91 | 322.24 | 174.58 | ND | 276.03 | 13. 58 |
| | After crushing treatment | 0.30 | 2.11 | 1.19 | 2.80 | 3.23 | 3.34 | 3.50 | 1.56 | 1.74 | 0.20 | 8.04 | 3.81 | 3.82 |
| Mode diameter (pm) | Before crushing treatment | 30.62 | 419.58 | 30.62 | 7.20 | 7.19 | 82.99 | 63.25 | 321.99 | 16. 64 | 87.57 | ND | 205.48 | 4.79 |
| | After crushing treatment | 0.18 | 0.54 | 0.68 | 0.18 | 0.18 | 0.73 | 0.82 | 0.73 | 0.68 | 0.27 | 4.78 | 1.76 | 1.84 |
| Average particle diameter ($\mu$m) | Before crushing treatment | 13.31 | 281.79 | 15.86 | 9.91 | 12.36 | 79.69 | 53.13 | 216.52 | 70.27 | 38 . 07 | ND | 128.30 | 8.64 |
| | After crushing treatment | 0.29 | 0.87 | 0.68 | 0.85 | 0.94 | 0.93 | 0.96 | 1.14 | 0.76 | 0.42 | 4.28 | 1.45 | 1.93 |

**Claims**

1. A zirconia-based powder material, wherein $[(Vp_{10\text{-}100})/(Vp_{100\text{-}6000})]$ satisfies a following Formula [1], provided that in a pore diameter distribution determined by a mercury intrusion method, a pore volume in a range of a pore diameter of X nm or more and less than Y nm is taken as $Vp_{X\text{-}Y}$:

$$\text{Formula [1]} \quad 0.4 \leq [(Vp_{10\text{-}100})/(Vp_{100\text{-}6000})] \leq 1.$$

2. The zirconia-based powder material according to claim 1, wherein $[(Vp_{10\text{-}100})/(Vp_{5\text{-}6000})]$ satisfies a following Formula [2]:

$$\text{Formula [2]} \quad 0.2 \leq [(Vp_{10\text{-}100})/(Vp_{5\text{-}6000})] \leq 0.5.$$

3. The zirconia-based powder material according to claim 1 or 2, wherein $[(Vp_{5\text{-}10})/(Vp_{5\text{-}6000})]$ satisfies a following Formula [3]:

$$\text{Formula [3]} \quad 0.001 \leq [(Vp_{5\text{-}10})/(Vp_{5\text{-}6000})] \leq 0.1.$$

4. The zirconia-based powder material according to any one of claims 1 to 3, wherein $[(Vp_{100\text{-}6000})/(Vp_{5\text{-}6000})]$ satisfies a following Formula [4] :

$$\text{Formula [4]} \quad 0.5 \leq [(Vp_{100\text{-}6000})/(Vp_{5\text{-}6000})] \leq 0.8.$$

5. The zirconia-based powder material according to any one of claims 1 to 4, wherein $Vp_{5\text{-}6000}$ is 0.5 mL/g or more and 2 mL/g or less.

6. The zirconia-based powder material according to any one of claims 1 to 5, comprising 70% by mass or more of $ZrO_2$.

7. The zirconia-based powder material according to any one of claims 1 to 6, wherein a particle diameter $D_{50}$ after a following crushing treatment is 0.05 um or more and 1.5 um or less:

   <Crushing treatment>
   0.1 g of the zirconia-based powder is charged into 40 mL of pure water, and subjected to a homogenizer treatment for 5 minutes under the following crushing condition using an ultrasonic homogenizer manufactured by BRANSON: product name Digital Sonifier 250 type:
   <Crushing condition>

   oscillation frequency: 20 kHz;
   high frequency output: 200 W; and
   amplitude control: 40 ± 5%.

Fig.1

Fig.2

Fig.3

Fig.4

## Fig.5

## Fig.6

## Fig.7

## Fig.8

## Fig.9

## Fig.10

Fig.11

Fig.12

<table>
<tr><td colspan="2">**INTERNATIONAL SEARCH REPORT**</td><td>International application No.<br>**PCT/JP2023/010521**</td></tr>
</table>

**A.    CLASSIFICATION OF SUBJECT MATTER**

***C01G 25/02***(2006.01)i; ***C01G 25/00***(2006.01)i
FI:    C01G25/02; C01G25/00

According to International Patent Classification (IPC) or to both national classification and IPC

**B.    FIELDS SEARCHED**

Minimum documentation searched (classification system followed by classification symbols)

C01G25/02; C01G25/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2008-081392 A (DAIICHI KIGENSOKAGAKU KOGYO CO LTD) 10 April 2008 (2008-04-10)<br>    paragraph [0051], example 1, fig. 3 | 1-7 |
| X | WO 2020/195973 A1 (DAIICHI KIGENSOKAGAKU KOGYO CO LTD) 01 October 2020 (2020-10-01)<br>    paragraphs [0109]-[0114], [0165]-[0166], comparative example 1, table 1, fig. 1 | 1-5, 7 |
| A | | 6 |
| A | WO 2021/020104 A1 (DAIICHI KIGENSOKAGAKU KOGYO CO LTD) 04 February 2021 (2021-02-04)<br>    entire text | 1-7 |

☐ Further documents are listed in the continuation of Box C.        ☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **12 May 2023** | **23 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/010521**

| Patent document cited in search report | | | Publication date (day/month/year) | Patent family member(s) | | | Publication date (day/month/year) |
|---|---|---|---|---|---|---|---|
| JP | 2008-081392 | A | 10 April 2008 | US paragraph [0063], example 1, fig. 3 | 2008/0050593 | A1 | |
| | | | | EP | 1894620 | A1 | |
| | | | | CN | 101372420 | A | |
| WO | 2020/195973 | A1 | 01 October 2020 | US paragraphs [0171]-[0177], [0229]-[0238], comparative example 1, table 1, fig. 1 | 2022/0106195 | A1 | |
| | | | | EP | 3885317 | A1 | |
| | | | | CN | 113631515 | A | |
| WO | 2021/020104 | A1 | 04 February 2021 | US entire text | 2022/0177372 | A1 | |
| | | | | EP | 3950596 | A1 | |
| | | | | CN | 114127030 | A | |

Form PCT/ISA/210 (patent family annex) (January 2015)

**EP 4 431 460 A1**

**REFERENCES CITED IN THE DESCRIPTION**

**Patent documents cited in the description**

- WO 2020195973 A